# FASCICULE DE BREVET EUROPEEN

(11) **EP 2 215 383 B1**
(45) Date de publication et mention de la délivrance du brevet: **21.09.2016**
(21) Numéro de dépôt: 08847333.5
(22) Date de dépôt: 06.11.2008
(51) Int. Cl.: F16H 57/08, F04D 25/04, F04D 25/06, F04D 25/08, F04D 29/06, F16H 1/28, F16H 55/06, F16H 57/04, F24F 7/007, H02K 7/116, F04D 25/02

(54) **VENTILATEUR AVEC ENGRENAGES PLANETAIRES**
LÜFTER MIT PLANETENGETRIEBE
FAN WITH PLANETARY GEAR

(30) Priorité: 07.11.2007 CA 2610045
(43) Date de publication de la demande: 11.08.2010
(73) Titulaire: Durand, Marcel, Upton, QC J0H 2E0 (CA)
(72) Inventeur: Durand, Marcel, Upton, QC J0H 2E0 (CA)
(74) Mandataire: Browne, Robin Forsythe
(86) Numéro de dépôt international: PCT/CA2008/001965
(87) Numéro de publication internationale: WO 2009/059421

(56) Documents cités:
- EP-B1- 0 635 658
- CA-A1- 2 095 584
- CA-A1- 2 114 078
- CA-C- 1 324 007
- DE-C1- 19 711 423
- JP-A- 2000 134 869
- US-A- 4 763 031
- US-A- 5 366 423
- US-A- 5 366 423
- US-A- 5 462 371
- AVALLONE EUGENE ATTILIO ET AL: "Marks' standard handbook for mechanical engineers, Passage", 1 janvier 1996 (1996-01-01), MARKS' STANDARD HANDBOOK FOR MECHANICAL ENGINEERS, MC GRAW HILL, US, PAGE(S) 8.113, XP008134455, ISBN: 978-0-07-004997-0 * pages 8-113, ligne 12-14 *
- AVALLONE E. A. ET AL.: 'Marks' Standard Handbook for Mechanical Engineers', 1996, MCGRAW-HILL pages 8 - 113, XP008134455

## Description

### DOMAINE DE L'INVENTION

La présente invention vise de façon générale le domaine des systèmes de transmission de moteurs. Plus particulièrement, elle a trait à une transmission à engrenages planétaires pour un système moteur.

### DESCRIPTION DE L'ART ANTÉRIEUR

Dans le secteur agro-alimentaire, des systèmes de ventilation sont utilisés pour aider l'aération de différents locaux ou bâtiments. Plusieurs types de ventilateurs existent pour adresser ce besoin. Cependant, compte tenu de la forte utilisation de ces ventilateurs, ces systèmes sont souvent connus comme étant de grands consommateurs d'énergie, en plus d'avoir des efficacités décevantes.

Ainsi il existe un besoin pour un système à utiliser avec un moteur de ventilateur qui pourrait mieux contourner les problèmes de grande consommation d'énergie et de manque d'efficacité des systèmes de ventilation existants.

Le document JP 2000 134869 A divulgue un système moteur comprenant un moteur électrique et une transmission à engrenage planétaire faite de plastique. Le document propose dans l'introduction d'utiliser ce système moteur pour l'entraînement d'un ventilateur.

Par ailleurs, il est généralement connu qu'une transmission à engrenages en plastique peut fonctionner sans lubrifiant. Voir par exemple l'ouvrage "Mark's standard handbook for mechanical engineers", ISBN 978-0-07-004997-0, page 8-113.

### SOMMAIRE DE L'INVENTION

Bien que le système décrit plus en détail ci-après et illustré sur les dessins annexés est essentiellement une transmission utilisée dans un ventilateur, on comprendra que ce même système est aussi utilisable dans d'autres applications, incluant tout système comprenant un moteur devant être utilisé pendant de longues périodes de temps et pouvant bénéficier d'améliorations en efficacité énergétique. Un exemple d'un tel système serait une pompe de filtration de piscine.

La présente invention propose un ventilateur avec un système moteur faisant tourner une hélice du ventilateur, l'hélice comprenant:
- un moyeu apte à être entraîné par le membre de sortie, ledit moyeu comprenant une structure cylindrique avec une surface périphérique d'une largeur donnée, une surface avant et une surface arrière, ledit moyeu comprenant également une masse inertielle fixée à la structure cylindrique dont le poids est choisi pour maximiser un débit d'air du ventilateur en minimisant une puissance tirée par le moteur; et
- une pluralité de pales solidement intégrées au moyeu, chaque pale comprenant une base s'étendant sur la surface périphérique de la surface avant vers la surface arrière du moyeu;
le système moteur comprenant:
- un moteur ayant un rotor; et
- une transmission à engrenage planétaire reliant le rotor du moteur à l'hélice, comprenant:
   - un premier engrenage solaire fait de plastique et relié au rotor; et
   - un système d'engrenage planétaire fait de plastique, apte à être entraîné par l'engrenage solaire pour démultiplier une vitesse du rotor et ayant un membre de sortie apte à se connecter à l'hélice, l'engrenage solaire et le système d'engrenage planétaire étant libres de lubrifiant,
le ventilateur étant caractérisé en ce que l'hélice a un diamètre entre 12 et 30 pouces, le rotor est apte à tourner à une vitesse maximale sans charge de 13000 tours par minute, et la transmission réduit la vitesse du membre de sortie par rapport à la vitesse du rotor dans un rapport 5:1.

Préférablement, le système d'engrenage planétaire du ventilateur de l'invention comprend de surcroît:
- un premier port d'entrée et un premier port de sortie pour un fluide pressurisé;
- un premier disque de pales apte à être entraîné par le fluide pressurisé entrant par le premier port d'entrée, ledit premier disque de pales étant apte à entraîner le premier engrenage solaire pour augmenter un couple appliqué sur la charge; et
- un premier système hydraulique en circuit fermé relié au premier port d'entrée au premier port de sortie, ledit premier système hydraulique comprenant une première pompe auxiliaire pour recirculer le fluide pressurisé sortant du premier port de sortie vers le premier port d'entrée.

Préférablement, l'hélice comprend quatre pales.

Préférablement, l'hélice comprend également :
- un moyeu apte à être entraîné par le membre de sortie, ledit moyeu comprenant une structure cylindrique avec une surface périphérique d'une largeur donnée, une surface avant et une surface arrière, ledit moyeu comprenant également une masse inertielle fixée à la structure cylindrique dont le poids est choisi pour maximiser un débit d'air du ventilateur en minimisant une puissance tirée par le moteur; et
- une pluralité de pales solidement intégrées au moyeu, chaque pale comprenant une base s'étendant sur la surface périphérique de la surface avant vers la surface arrière du moyeu.

La présente invention permet donc d'optimiser l'efficacité en terme de débit d'air (pi³/min) déplacé par le ventilateur pour une consommation d'énergie donnée. En fait, le système de ventilateur selon l'invention offre des performances supérieures à celles retrouvées dans les systèmes de l'art antérieur.

Le système selon l'invention permet aussi d'obtenir des performances accrues en termes d'élimination de la lubrification de la transmission requise pour l'opération du ventilateur ou toute autre charge sur le système moteur.

L'invention et ses nombreux avantages seront mieux compris à la lecture de la description non restrictive qui suit d'un mode de réalisation préféré de l'invention, faite en se référant aux figures annexes.

### BRÈVE DESCRIPTION DES FIGURES

La figure 1 montre une vue explosive du système moteur selon un mode préféré de réalisation de l'invention.
La figure 2 est une vue de coupe du système moteur illustré à la figure 1 une fois assemblé.
La figure 3 montre une vue explosive du système moteur selon un autre mode préféré de réalisation de l'invention.
La figure 4 est une vue de coupe du système moteur illustré à la figure 3 une fois assemblé.
La figure 5 montre une vue explosive du système moteur selon un autre mode préféré de réalisation de l'invention.
La figure 6 est une vue de coupe du système moteur illustré à la figure 5 une fois assemblé.
La figure 7 montre une vue explosive du système moteur selon un mode préféré de réalisation de l'invention.
La figure 8 montre une vue explosive du système moteur selon un autre mode préféré de réalisation de l'invention.
La figure 9 est une vue de coupe du système moteur illustré à la figure 7 une fois assemblé.
La figure 10 est une vue de coupe du système moteur illustré à la figure 8 une fois assemblé.
La figure 11 est une vue en perspective semi-transparente du système moteur illustré à la figure 9.
La figure 12 est une vue en perspective de derrière d'une hélice pouvant être utilisée avec un système moteur selon un mode préféré de réalisation de l'invention.
La figure 13 est une vue en perspective de face de l'hélice montrée à la figure 12.
La figure 14 est une vue en perspective de face d'un ventilateur utilisé en combinaison avec le système ventilateur selon un mode préféré de réalisation de l'invention.
La figure 15 est une vue en perspective de derrière du ventilateur montré à la figure 14.
La figure 16 est une vue explosive du ventilateur montré à la figure 14.
La figure 17 est une vue de coupe en perspective du ventilateur montré à la figure 14.

### DESCRIPTION DE MODES PRÉFÉRÉS DE RÉALISATION

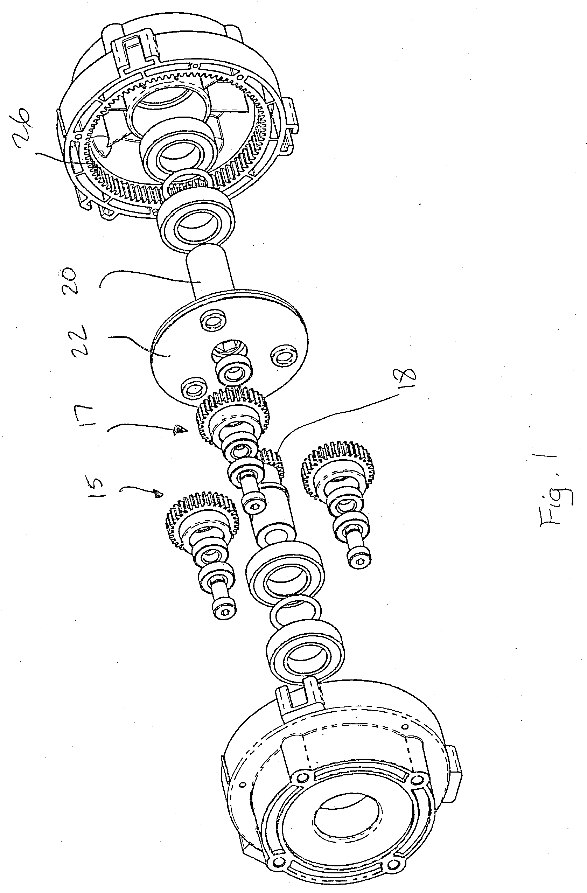

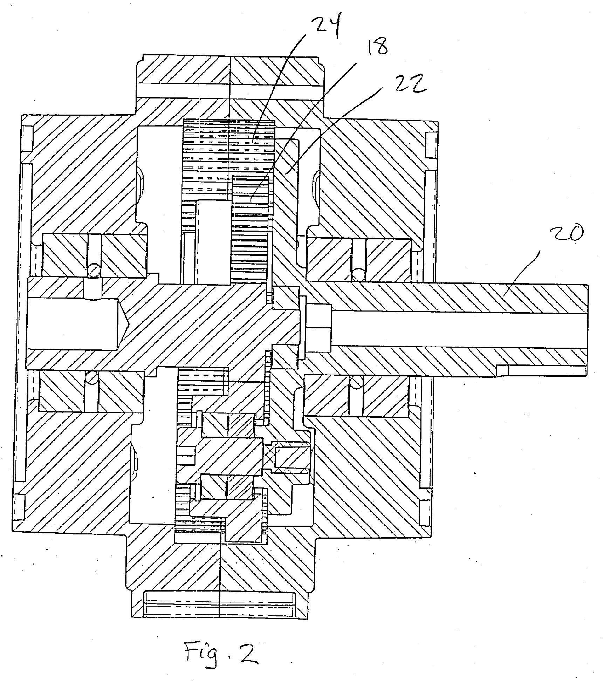

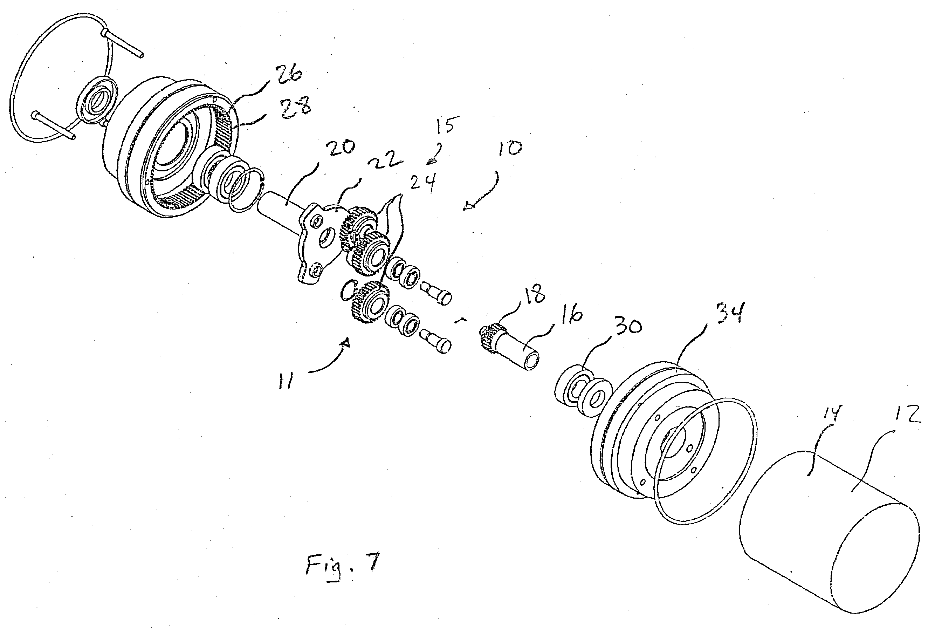

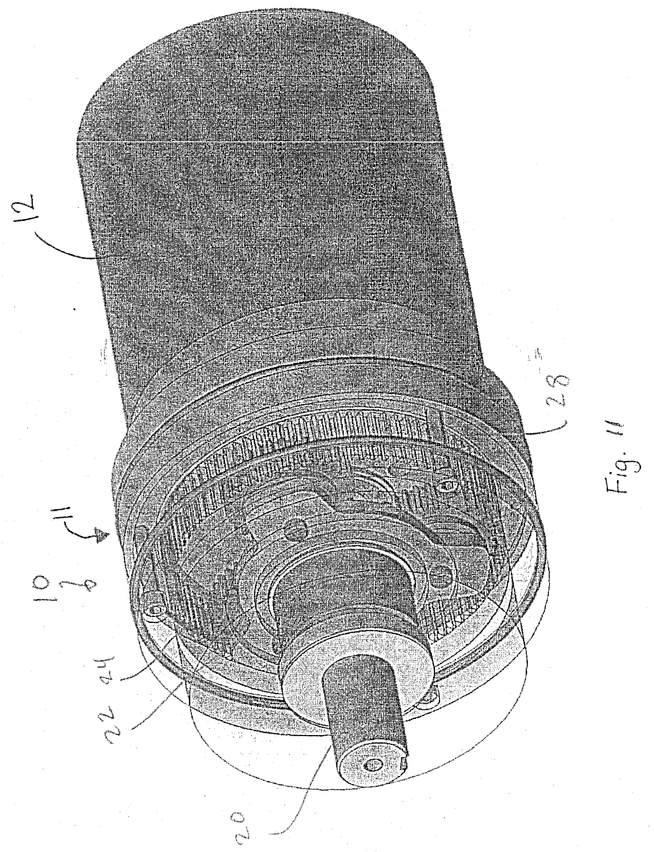

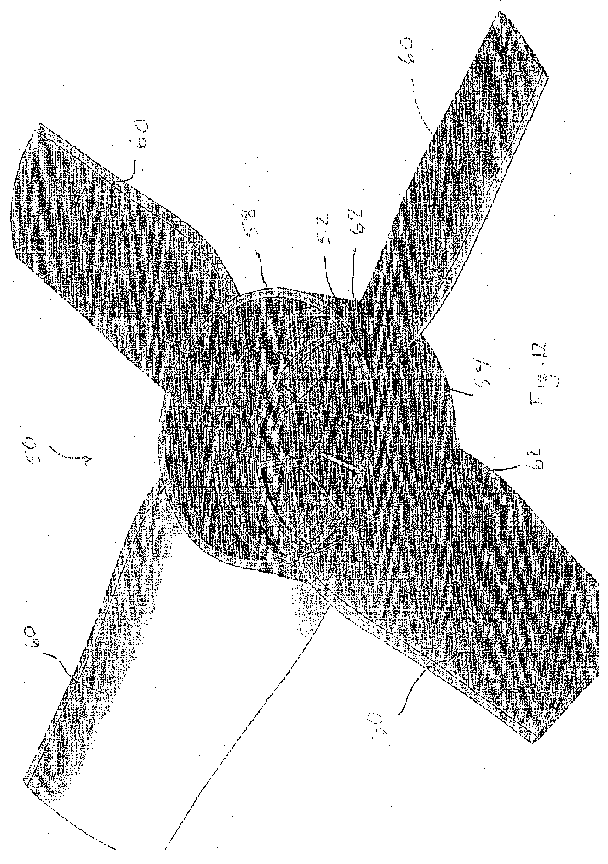

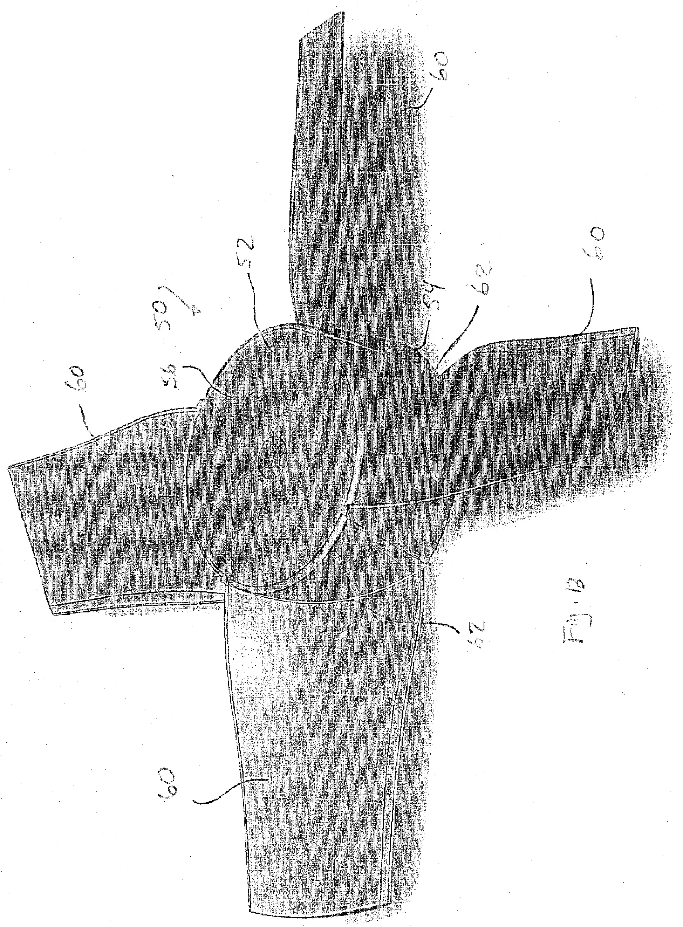

Différents modes préférés de réalisation du système moteur 10 selon l'invention sont illustrés aux figures 1 à 11. Si on se réfère aux figures 7 à 11, le système moteur 10 fait tourner une charge (montrée aux figures 12 et 13). Le système comprend un moteur 12 ayant un rotor 13 et une transmission à engrenage planétaire 15 reliant le rotor 13 du moteur 12 à la charge. Si on se réfère à la figure 1, la transmission à engrenage planétaire 15 comprend un premier engrenage solaire 18 fait de plastique et relié au rotor 13. La transmission 15 comprend aussi un système d'engrenage planétaire 17 fait de plastique, apte à être entraîné par l'engrenage solaire 18 pour démultiplier une vitesse du rotor 13. Le système d'engrenage planétaire 17 a un membre de sortie 20 apte à se connecter à la charge. L'engrenage solaire 18 et le système d'engrenage planétaire 17 sont libres de lubrifiant.

De préférence, le système d'engrenage planétaire 17 comprend un groupe d'au moins deux engrenages planétaires 24 aptes à être entraînés par le premier engrenage solaire 18. Le groupe d'au moins deux engrenages planétaires 24 est apte à entraîner le membre de sortie 20 par une structure de base 22. Le système d'engrenage planétaire 17 comprend aussi un premier engrenage annulaire 26 co-axial avec le premier engrenage solaire 18 et apte à coopérer avec les engrenages planétaires 24. Le premier engrenage annulaire 26 est fixé à un stator du moteur.

De préférence, le groupe d'au moins deux engrenages planétaires 24 comprend trois engrenages planétaires 24 disposés en triangle autour du premier engrenage solaire 18.

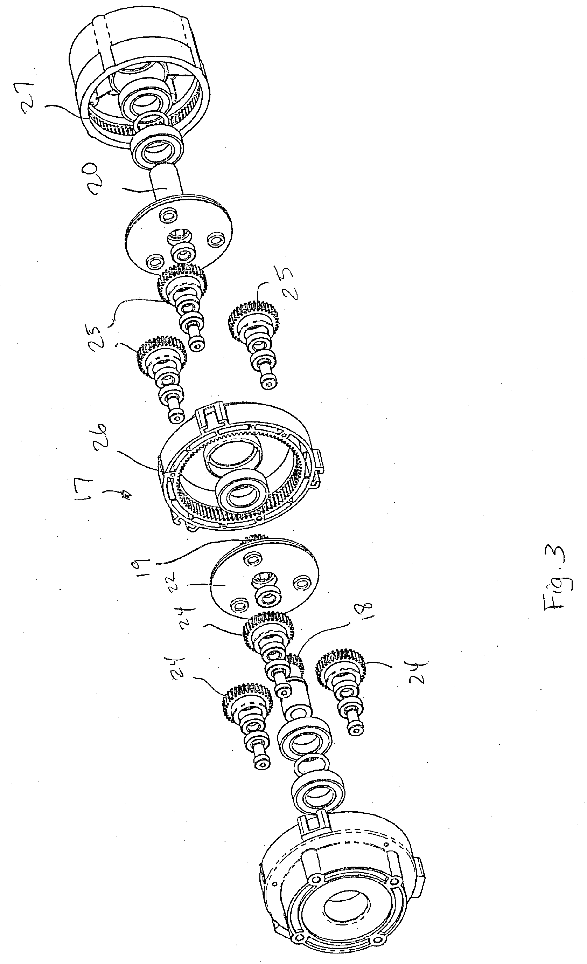

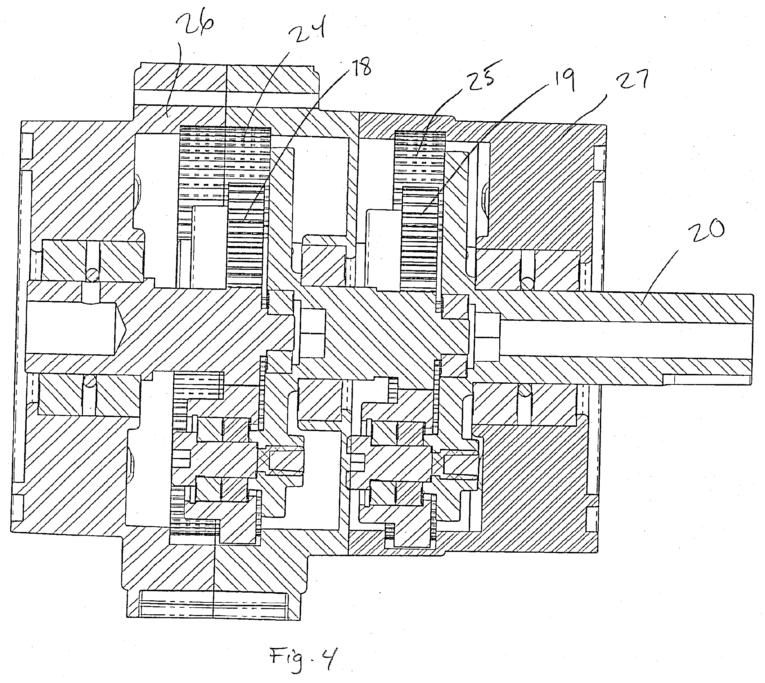

Selon un autre mode de réalisation et tel qu'illustré aux figures 3 et 4, le système d'engrenage planétaire 17 comprend un deuxième engrenage solaire 19. Le premier groupe d'au moins deux engrenages planétaires 24 est apte à entraîner le deuxième engrenage solaire 19. Le système d'engrenage planétaire 17 comprend aussi un deuxième groupe d'au moins deux engrenages planétaires 25 aptes à être entraînés par le deuxième engrenage solaire 19. Le deuxième groupe d'au moins deux engrenages planétaires 25 est apte à entraîner le membre de sortie 20. Le système d'engrenage planétaire 17 comprend aussi un deuxième engrenage annulaire 27 co-axial avec le deuxième engrenage solaire 19 et apte à coopérer avec le deuxième groupe d'au moins deux engrenages planétaires 25. Le deuxième engrenage annulaire 27 est fixé au stator du moteur.

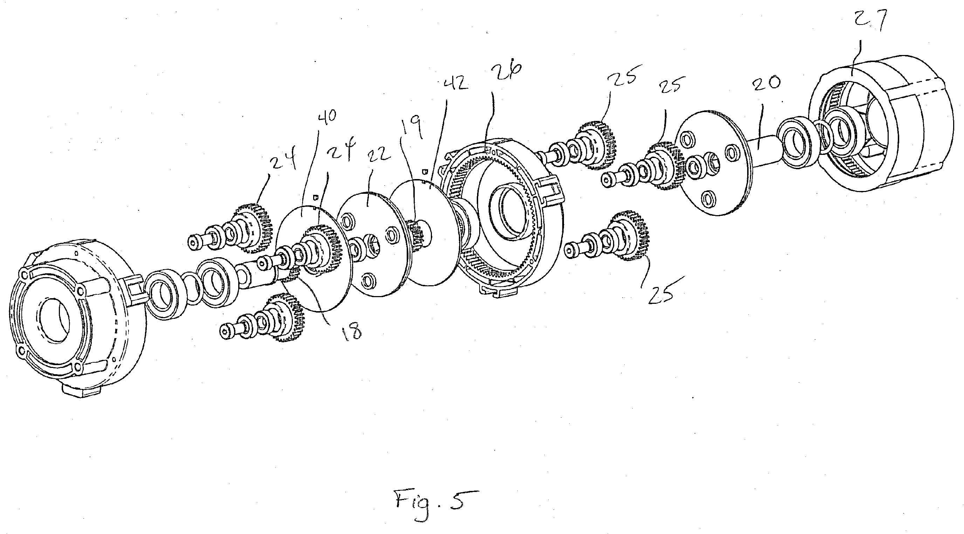

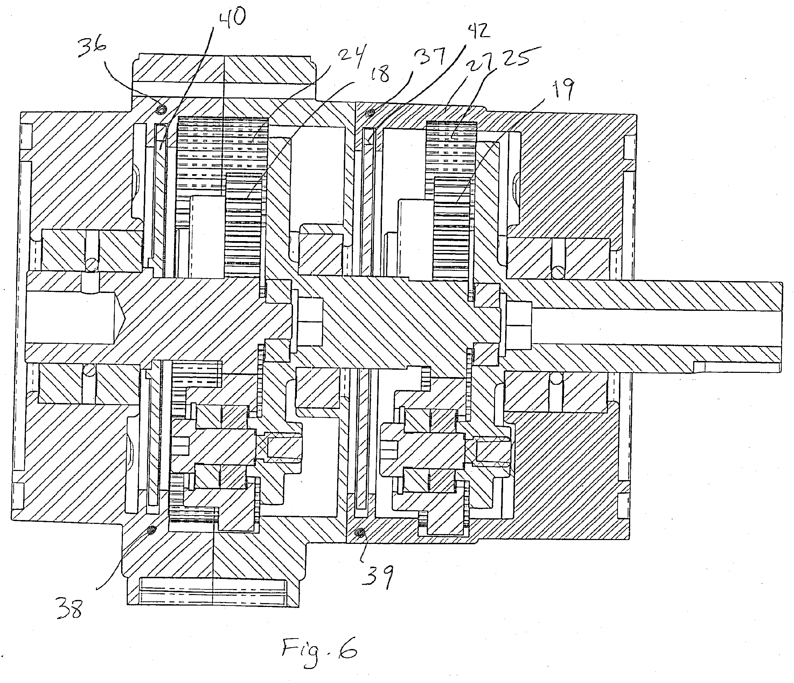

Selon un autre mode de réalisation et tel qu'illustré aux figures 5 et 6, le système d'engrenage planétaire comprend un premier port d'entrée 36 et un premier port de sortie 38 pour un fluide pressurisé. Le système d'engrenage planétaire 17 comprend aussi un premier disque de pales 40 apte à être entraîné par le fluide pressurisé entrant par le premier port d'entrée 36. Le premier disque de pales 40 est apte à entraîner le premier engrenage solaire 18 pour augmenter un couple appliqué sur la charge. Le système d'engrenage planétaire 17 comprend aussi un premier système hydraulique en circuit fermé relié au premier port d'entrée 36 et au premier port de sortie 38. Le premier système hydraulique comprend une première pompe auxiliaire pour recirculer le fluide pressurisé sortant du premier port de sortie 38 vers le premier port d'entrée 36.

De préférence, le disque de pales comprend un joint flottant.

De préférence, le deuxième engrenage annulaire 27 comprend un deuxième port d'entrée 37 et un deuxième port de sortie 39 pour du fluide pressurisé. Le système d'engrenage planétaire 17 comprend aussi un deuxième disque de pales 42 apte à être entraîné par le fluide pressurisé entrant par le deuxième port d'entrée 37. Le deuxième disque de pales 42 est apte à entraîner le deuxième engrenage solaire 19 pour augmenter un couple appliqué sur la charge. Le système d'engrenage planétaire 17 comprend aussi un deuxième système hydraulique en circuit fermé relié au deuxième port d'entrée 37 et au deuxième port de sortie 39. Le deuxième système hydraulique comprend une première pompe auxiliaire pour recirculer le fluide pressurisé sortant du deuxième port de sortie 39 vers le deuxième port d'entrée 37.

De préférence, le fluide pressurisé est une combinaison d'air et d'eau.

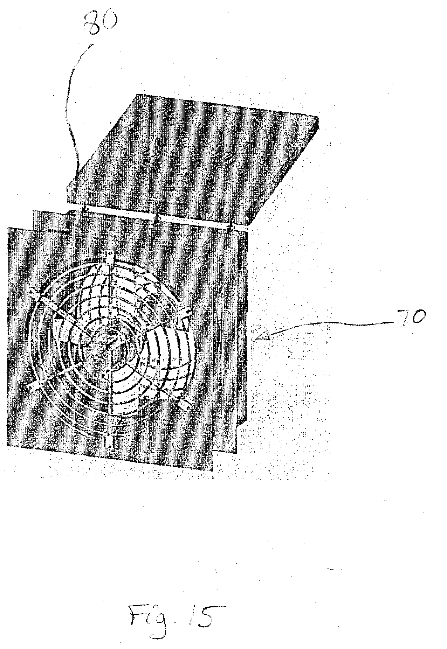

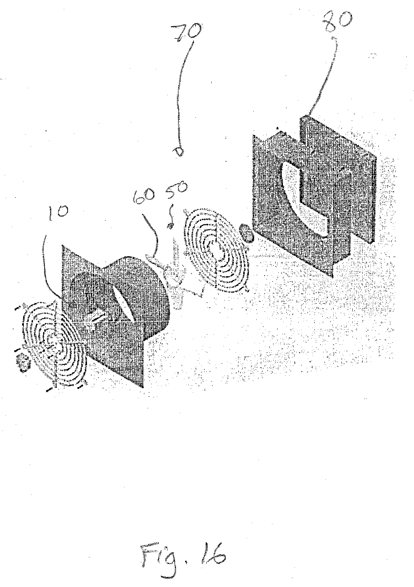

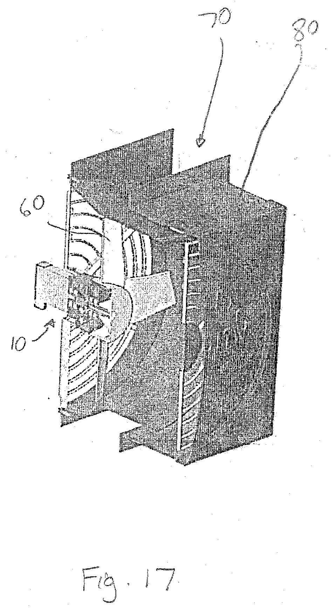

Selon l'invention et tel qu'illustré dans les figures 12 à 17, le système moteur 10 est utilisé en combinaison avec une hélice 50
de ventilateur 70.

De préférence, tel qu'illustré dans les figures 12 et 13, l'hélice 50 comprend quatre pales 60.

De préférence, l'hélice 50 comprend un moyeu 52 apte à être entraîné par le membre de sortie. Le moyeu 52 comprend une structure cylindrique avec une surface périphérique 54 d'une largeur donnée, une surface avant 56 et une surface arrière 58. Le moyeu 52 comprend également une masse inertielle fixée à la structure cylindrique dont le poids est choisi pour maximiser un débit d'air du ventilateur en minimisant une puissance tirée par le moteur. L'hélice 50 comprend aussi une pluralité de pales 60 solidement intégrées au moyeu 52. Chaque pale 60 comprend une base 62 s'étendant sur la surface périphérique 54 de la surface avant 56 vers la surface arrière 58 du moyeu 52. Cette configuration de la base de la pale réduit les pertes dues à la turbulence de l'écoulement d'air autour du moyeu.

Le choix du poids de la masse inertielle est effectué par une calibration du ventilateur en mesurant la puissance tirée par le moteur, et le volume d'air déplacé par le ventilateur. Le poids de la masse peut être varié jusqu'à la découverte d'un poids préférentiel qui minimise l'énergie consommée par le moteur pour une même vitesse de rotation du ventilateur. Un appareil de mesure peut être branché sur le moteur afin de mesurer l'énergie consommée par le moteur ainsi que la vitesse de rotation du rotor. Le volume d'air déplacé par le ventilateur peut être déduit de la vitesse de rotation du rotor, en connaissant le rapport de réduction de vitesse entre la charge et le rotor par la transmission. Par exemple, pour un ventilateur de 20", l'addition d'une masse inertielle d'un poids d'une livre permet de réduire entre 125-150W la consommation du moteur.

Selon un autre mode de réalisation préféré, la masse inertielle apte à être entraînée par le rotor et dont le poids est choisi pour maximiser une vitesse de rotation dur rotor en minimisant une puissance tirée par le moteur peut être positionnée ailleurs dans le système d'engrenage planétaire et n'est pas nécessairement attachée à la charge.

De préférence, le plastique utilisé pour les engrenages solaires ou les systèmes d'engrenage planétaire est du polyamide 46. D'autres matériaux ayant des propriétés similaires au polyamide 46 pourraient également être utilisés. Les propriétés mécaniques du polyamide 46 sont présentées dans le tableau ci-dessous :

**Tableau 1 Propriétés de polyamide 46**

| **Propriété** | **Valeur nominale** | **Méthode de test** |
|---|---|---|
| **Mécanique** | | |
| Module de traction | 1000 MPa | ISO 527-2 |
| Contrainte à la rupture en traction | 50.0 MPa | ISO 527-2 |
| Déformation à la rupture en traction | 15% | ISO 527-2¹ |
| Contrainte nominale en | >50% | ISO 527-2 |
| traction à la cassure | | |
| Module de flexion | 900 MPa | ISO 178 |
| **Impact** | | |
| Résistance d'impact à l'entaille Charpy | | ISO 179/1eA |
| -30°C | 5.00 kJ/m² | |
| 23°C | 15.0 kJ/m² | |
| 23°C | 30.0 kJ/m² | |
| Résistance d'impact Charpy sans entaille | | ISO 179/1eU |
| -30°C | Aucune cassure | |
| 23°C | Aucune Cassure | |
| Résistance d'impact à l'entaille IZOD | | ISO 180/1A |
| -40°C | 5.00 kJ/m² | |
| 23°C | 14.0 kJ/m² | |
| **Électrique** | | |
| Résistivité de surface | 1.0E+ 13 ohms | IEC 60093¹ |
| Résistivité de volume | | IEC 60093 |
| - | 1.0E+ 9 ohm•cm | |
| - | 1.0E+ 7 ohm•m | |
| Index comparatif de cheminement | 400 | IEC 60112¹ |

| | | |
|---|---|---|
| ¹Note : testé selon le standard ISO 10350 23°C et 50% humidité relative | | |

Selon l'invention, le système moteur est utilisé en combinaison avec une hélice d'un ventilateur et le rotor est apte à tourner à une vitesse allant jusqu'à 13000 tours par minute sans charge. De surcroît, la
vitesse du rotor est démultipliée pour atteindre à la charge une vitesse entre 1700 et 1750 tours par minute pour un ventilateur de 20 pouces. Ces paramètres offrent des performances supérieures en terme de consommation du moteur à celles retrouvées dans les ventilateurs de l'art antérieur.

Le ventilateur selon un mode de réalisation préféré de l'invention offre des performances intéressantes en terme de débit. Le tableau ci-dessous illustre des performances typiques pour le ventilateur pour différents débits.

| **Tableau 2 - Calibration des Watts et des CFM du ventilateur** | | | | |
|---|---|---|---|---|
| **RPM** | **Watts** | **Pression** | **CFM** | **CFM par Watts** |
| .............. | 30 | ............. | 900 | 30.00 |
| 2150 | 40 | 0.00 | 1000 | 25.00 |
| 2545 | 50 | 0.01 | 1286 | 25.72 |
| 2810 | 60 | 0.02 | 1886 | 31.43 |
| 3000 | 70 | 0.03 | 2220 | 31.71 |
| 3220 | 80 | 0.05 | 2620 | 32.75 |
| 3410 | 90 | 0.05 | 2929 | 32.54 |
| 3560 | 100 | 0.06 | 3045 | 30.45 |
| 3720 | 110 | 0.07 | 3353 | 30.48 |
| 3900 | 120 | 0.08 | 3620 | 30.16 |
| 4090 | 130 | 0.10 | 3750 | 28.84 |
| 4230 | 140 | 0.10 | 3990 | 28.50 |
| 4350 | 150 | 0.12 | 4138 | 27.59 |
| 4510 | 160 | 0.13 | 4410 | 27.56 |
| 4660 | 170 | 0.14 | 4707 | 27.69 |
| 4790 | 180 | 0.16 | 4947 | 27.48 |
| 4910 | 190 | 0.17 | 5297 | 27.88 |
| 5080 | 200 | 0.17 | 5470 | 27.35 |
| 5230 | 210 | 0.185 | 5500 | 26.19 |
| 5360 | 220 | 0.20 | 5743 | 26.10 |
| 5470 | 230 | 0.225 | 5890 | 25.61 |
| 5590 | 240 | 0.25 | 6000 | 25.00 |
| 5720 | 250 | 0.25 | 6140 | 24.56 |
| 5800 | 260 | 0.25 | 6300 | 24.23 |
| 5900 | 270 | 0.25 | 6420 | 23.78 |
| 6040 | 280 | 0.27 | 6630 | 23.68 |
| 6120 | 290 | 0.27 | 6680 | 23.03 |
| 6220 | 300 | 0.28 | 6837 | 22.79 |
| 6290 | 310 | 0.30 | 6920 | 22.32 |
| 6440 | 320 | 0.30 | 7040 | 22.00 |
| 6470 | 330 | 0.30 | 7127 | 21.60 |
| 6570 | 340 | 0.30 | 7300 | 21.47 |
| 6700 | 353 | 0.30 | 7360 | 20.84 |
| 6760 | 362 | 0.35 | 7450 | 20.58 |
| 6830 | 371 | 0.35 | 7480 | 20.16 |
| 6910 | 380 | 0.35 | 7520 | 19.79 |
| 7000 | 392 | 0.35 | 7670 | 19.57 |
| 7100 | 403 | 0.35 | 7888 | 19.57 |
| 7200 | 411 | 0.375 | 7875 | 19.16 |
| 7260 | 421 | 0.40 | 7923 | 18.82 |
| 7300 | 430 | 0.40 | 8110 | 18.86 |
| 7410 | 443 | 0.40 | 8220 | 18.55 |
| 7450 | 450 | 0.40 | 8230 | 18.29 |
| 7590 | 462 | 0.45 | 8446 | 18.28 |
| 7650 | 472 | 0.45 | 8430 | 17.86 |
| 7720 | 482 | 0.45 | 8450 | 17.53 |
| 7730 | 492 | 0.45 | 8598 | 17.47 |
| 7850 | 505 | 0.45 | 8800 | 17.42 |

Les données suivantes sont illustrées dans le tableau :
- RPM : vitesse de rotation du moteur
- Watts : consommation du moteur en watts
- Pression : pression en mm de Hg
- CFM : débit d'air en pi³/min
- CFM par watts : débit d'air en pi³/min par watt de consommation du moteur

De préférence, le ventilateur offre les caractéristiques suivantes :
- Une économie de 55% et plus du coût sur n'importe quel ventilateur présentement sur le marché canadien.
- Un ventilateur qui peut donner les CFM d'un ventilateur 12" à 30" sans surchauffe et sans inversion à bas régime.
- Un ventilateur qui abaisse sa consommation d'énergie en donnant le rendement maximum.
- Consommation minimale: 30 watts, 900 cfm (30 cfm = 1 watt).
- Consommation maximale: 506 watts, 8800 cfm (17,42 cfm = 1 watt).

De préférence, le ventilateur peut être intégré à un système de ventilation avec les caractéristiques suivantes :
- 8 ventilateurs variables indépendants;
- 2 stages fixes attribuables;
- 1 section d'entrée d'air;
- 10 capteurs qui offrent la possibilité de créer 10 zones attribuables;
- Afficheur en temps réel de la vitesse de chaque stage variable.

De préférence, le ventilateur a aussi les caractéristiques suivantes :
- Alimentation: 115/230 Vac, 60 Hz;
- Relais d'alarme: 5 A, 120 Vac;
- Sortie variable directe: 120/230, 7,5 A;
- Sorties d'entraînement: 0-5 V modulées, 50 mA;
- Entrées capteurs: 0-5 V modulées.

De préférence, le ventilateur offre les avantages suivants :
- Capacité de 0 à 8800 CFM par pression de 0,01 à 0,50;
- Consommation d'énergie: 30 watts minimum, 506 watts maximum;
- Ventilateur qui ne change pas sa rotation malgré le vent venant de l'extérieur;
- Ventilateur avec une grande capacité de variations: 5 à 1735 tours/minute;
- Un ventilateur qui peut inverser sa rotation pour refermer la porte du boîtier extérieur de façon étanche;
- Ventilateur qui est muni d'un contrôle pour modes manuel et automatique;
- Ventilateur muni d'une technologie d'hélice à quatre pales.

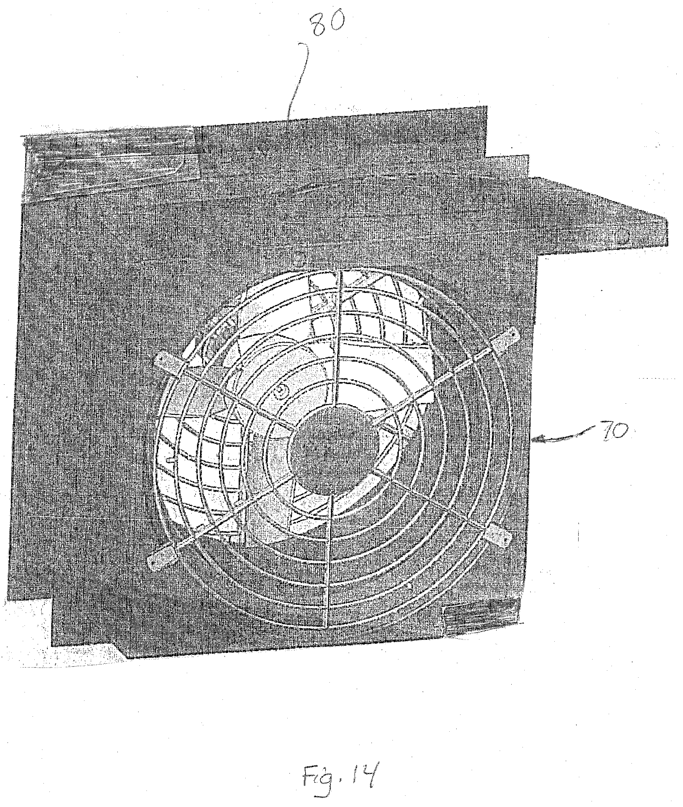

De préférence, le ventilateur 70 est placé dans un boîtier 80, tel qu'illustré dans les figures 14 à 17, ayant les caractéristiques suivantes :
- Le boîtier est entièrement fabriqué de plastique ABS;
- Le boîtier est doté d'une porte avant avec un étancheur bloquant toute infiltration d'air ou de froid;
- La porte avant du boîtier est aussi munie d'un loquet pour ne pas ouvrir au vent;
- Le boîtier ne possède aucun volet afin de maximiser les performances et de faciliter l'entretien;
- La grille est fabriquée de plastique HPS et de fibre de verre éliminant ainsi tous les problèmes de rouille;
- Une seule grandeur de trous à effectuer dans les murs du bâtiment, soit 24-1/4" par 24-1/4".

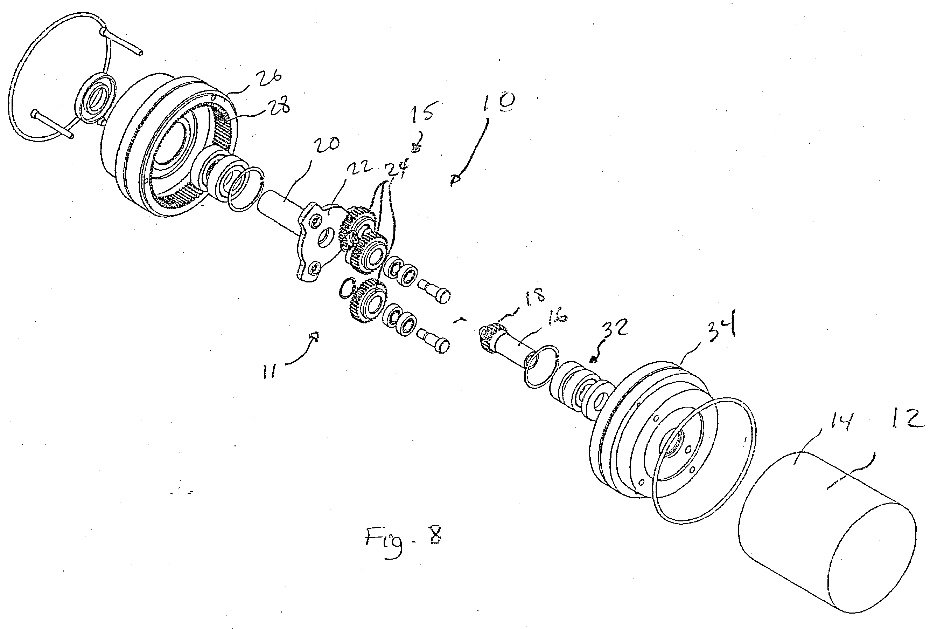

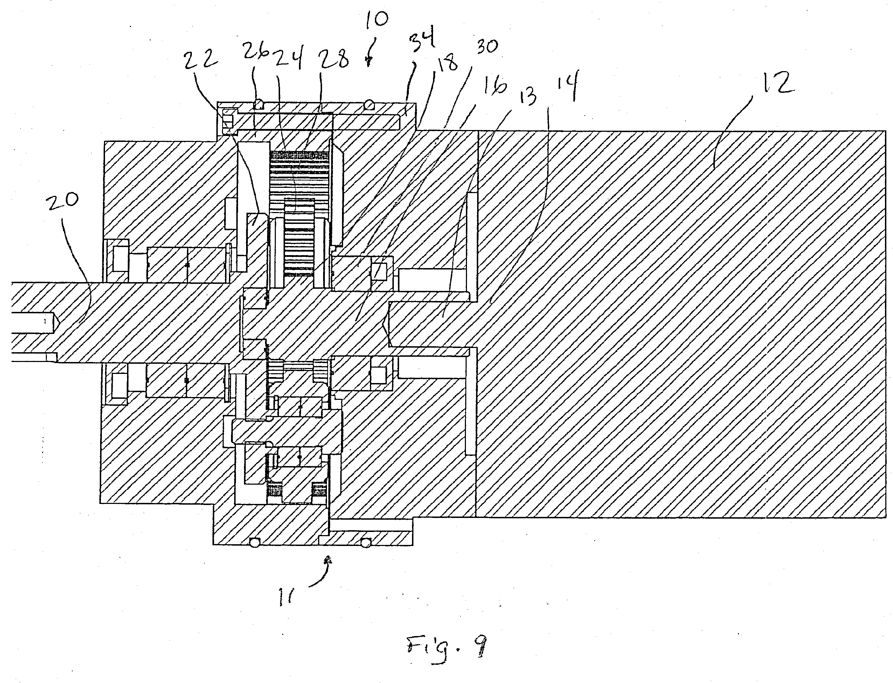

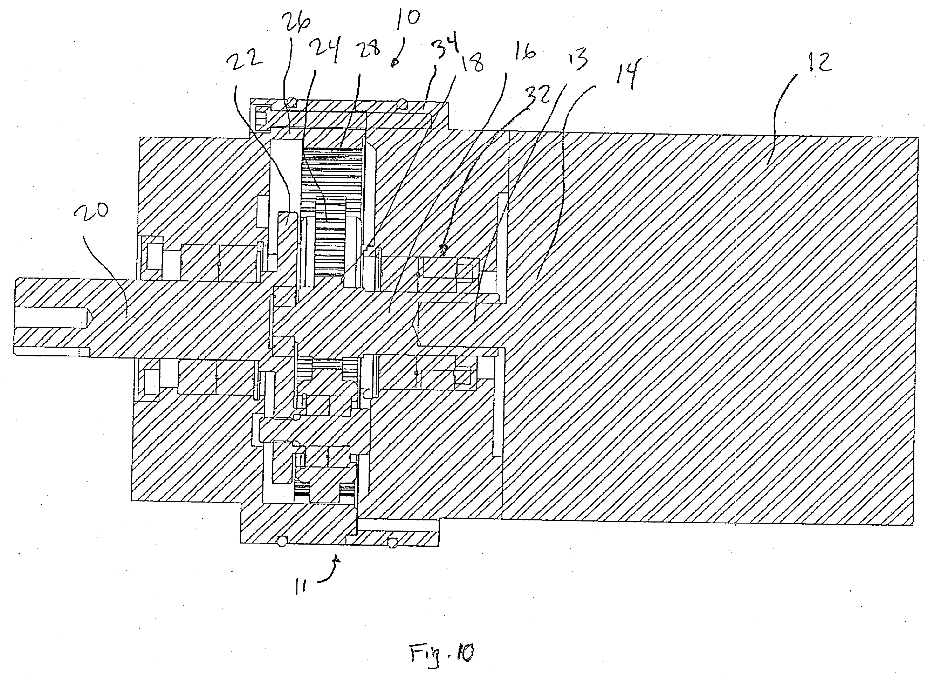

Un autre mode de réalisation préféré de l'invention correspondant à un prototype initial de l'invention est illustré dans les figures 7 à 11. Les figures 7 et 9 illustrent une transmission à rendement régulier avec un seul roulement à billes 30 entourant l'arbre d'entraînement 16 reliant l'engrenage solaire à la source motrice. Les figures 8 et 10 illustrent une transmission à haut rendement avec un roulement à billes double 32 entourant l'arbre d'entraînement 16. La transmission comprend également un boîtier 34 pour couvrir les pièces. Le roulement à billes permet de réduire les vibrations transmises au système. Dans le cas de l'application à un ventilateur, l'agencement des pièces permet d'éviter une surchauffe du moteur malgré la haute vitesse de rotation. En effet, avec la vitesse maximale sans charge du moteur à 13000 tours par minute, le moteur réussit malgré tout à faire tourner l'arbre d'entraînement chargé à une vitesse de 8500 tours par minute. La forme et la distribution de la masse dans l'hélice permettent d'avoir une inertie relativement constante par rapport au reste du système incluant la transmission et le moteur.

Selon l'invention, la transmission réduit la vitesse de l'arbre d'entraînement par rapport à la vitesse de l'arbre commandé dans un rapport 5 :1, donc allant par exemple d'une vitesse maximale de 8500 tours par minute à 1700 tours par minute.

Préférablement, l'arbre d'entraînement et celui relié à l'hélice sont faits d'acier trempé.

Préférablement, les engrenages ont des dents carrées lorsque le niveau de bruit généré par le système n'a pas d'importance. Cependant des dents en spirale peuvent être également utilisées afin de réduire le son généré par la transmission lorsque l'application le requiert.

Préférablement, le système moteur peut être utilisé avec des moteurs de puissances variables.

Préférablement, le boîtier entourant la transmission a un diamètre de l'ordre de 5".

Préférablement, dans l'application d'un système moteur avec un ventilateur, la masse inertielle ajoutée à l'hélice est de 890 g, pour une hélice ayant une masse de 3 livres au total. Alternativement, la masse inertielle peut être placée à d'autres endroits de la transmission. Par exemple, il est noté qu'un ajout de la masse inertielle à l'arbre d'entraînement du moteur offre certains avantages incluant une réduction du bruit généré par le système.

Préférablement, l'hélice est faite de plastique avec du métal renforcé au centre afin de réduire les vibrations transmises au reste du système.

Préférablement, le boîtier de la transmission et du moteur rend ceux-ci étanches à l'eau, ce qui est pratique pour leur utilisation dans des endroits humides ou soumis fréquemment à des nettoyages.

Selon l'invention, le ventilateur a un diamètre variant entre 12" et 30".

Préférablement, le moteur est un moteur triphasé sans balai à aimant permanent.

Le choix du plastique pour le matériel des engrenages planétaires vient du fait que des engrenages similaires en métal auraient générés trop de bruit et de chaleur. De plus, ce choix de matériel permet d'éliminer les besoins de lubrification de la transmission. En fait, une opération de la transmission a montré que l'insertion de trop d'huile dans le système causait une surchauffe de la transmission.

Il va de soi que de nombreuses modifications pourraient être apportées au mode de réalisation préférentiel qui vient d'être décrit sans pour autant sortir du cadre de la présente invention, dont la portée
est définie par les revendications qui suivent.

Il est bien entendu que les composantes et
configurations ne sont pas toutes essentielles à l'invention et ne devraient pas être prises dans un sens restrictif pour limiter la portée de la présente invention. La liste des composantes ne peut donc être considérée comme exhaustive ni limitative.

## Revendications

1. Un ventilateur comprenant:
- un moteur électrique ayant un rotor;
- une hélice de ventilateur ; et
- une transmission à engrenage planétaire reliant le rotor du moteur à l'hélice,
laquelle transmission comprenant :
- un premier engrenage solaire fait de plastique et relié au rotor;
- un système d'engrenage planétaire fait de plastique, apte à être entraîné par l'engrenage solaire pour démultiplier une vitesse du rotor et ayant un membre de sortie apte à se connecter à l'hélice,
le ventilateur étant **caractérisé en ce que**
l'engrenage solaire et le système d'engrenage planétaire sont libres de lubrifiant ; l'hélice a un diamètre entre 12 et 30 pouces ;
le rotor est apte à tourner à une vitesse maximale sans charge de 13000 tours par minute ; et la transmission réduit la vitesse du membre de sortie par rapport à la vitesse du rotor dans un rapport 5:1.

2. Ventilateur selon la revendication 1, dans lequel le système d'engrenage planétaire comprend :
- un groupe d'au moins deux engrenages planétaires aptes à être entraînés par le premier engrenage solaire, ledit groupe d'au moins deux engrenages planétaires étant apte à entraîner le membre de sortie; et
- un premier engrenage annulaire co-axial avec le premier engrenage solaire et apte à coopérer avec les engrenages planétaires, ledit premier engrenage annulaire étant fixé à un stator du moteur.

3. Ventilateur selon la revendication 2, dans lequel le groupe d'au moins deux engrenages planétaires comprend trois engrenages planétaires disposés en triangle autour du premier engrenage solaire.

4. Ventilateur selon la revendication 1, dans lequel le système d'engrenage planétaire comprend :
- un deuxième engrenage solaire;
- un premier groupe d'au moins deux engrenages planétaires aptes à être entraînés par le premier engrenage solaire, ledit premier groupe d'au moins deux engrenages planétaires étant apte à entraîner le deuxième engrenage solaire;
- un premier engrenage annulaire co-axial avec le premier engrenage solaire et apte à coopérer avec le premier groupe d'au moins deux engrenages planétaires, ledit premier engrenage annulaire étant fixé à un stator du moteur;
- un deuxième groupe d'au moins deux engrenages planétaires aptes à être entraînés par le deuxième engrenage solaire, ledit deuxième groupe d'au moins deux engrenages planétaires étant apte à entraîner le membre de sortie; et
- un deuxième engrenage annulaire co-axial avec le deuxième engrenage solaire et apte à coopérer avec le deuxième groupe d'au moins deux engrenages planétaires, ledit deuxième engrenage annulaire étant fixé au stator du moteur.

5. Ventilateur selon la revendication 4, dans lequel chacun des premier et deuxième groupes d'au moins deux engrenages planétaires comprend trois engrenages planétaires disposés en triangle respectivement autour des premier et deuxième engrenages solaires.

6. Ventilateur selon l'une quelconque des revendications 1 à 5, dans lequel le système d'engrenage planétaire comprend :
- un premier port d'entrée et un premier port de sortie pour un fluide pressurisé ;
- un premier disque de pales apte à être entraîné par le fluide pressurisé entrant par le premier port d'entrée, ledit premier disque de pales étant apte à entraîner le premier engrenage solaire pour augmenter un couple appliqué sur l'hélice ; et
- un premier système hydraulique en circuit fermé relié au premier port d'entrée au premier port de sortie, ledit premier système hydraulique comprenant une première pompe auxiliaire pour recirculer le fluide pressurisé sortant du premier port de sortie vers le premier port d'entrée.

7. Ventilateur selon l'une quelconque des revendications 4 ou 5, dans lequel le premier engrenage annulaire comprend un premier port d'entrée et un premier port de sortie pour un fluide pressurisé, le deuxième engrenage annulaire comprend un deuxième port d'entrée et un deuxième port de sortie pour du fluide pressurisé et le système d'engrenage planétaire comprend en outre :
- un premier disque de pales apte à être entraîné par le fluide pressurisé entrant par le premier port d'entrée, ledit premier disque de pales étant apte à entraîner le premier engrenage solaire pour augmenter un couple appliqué sur l'hélice;
- un premier système hydraulique en circuit fermé relié au premier port d'entrée et au premier port de sortie, ledit premier système hydraulique comprenant une première pompe auxiliaire pour recirculer le fluide pressurisé sortant du premier port de sortie vers le premier port d'entrée;
- un deuxième disque de pales apte à être entraîné par le fluide pressurisé entrant par le deuxième port d'entrée, ledit premier disque de pales étant apte à entraîner le deuxième engrenage solaire pour augmenter le couple appliqué sur l'hélice; et
- un deuxième système hydraulique en circuit fermé relié au deuxième port d'entrée et au deuxième port de sortie, ledit deuxième système hydraulique comprenant une deuxième pompe auxiliaire pour recirculer le fluide pressurisé sortant du deuxième port de sortie vers le deuxième port d'entrée.

8. Ventilateur selon l'une quelconque des revendications 6 ou 7, dans lequel le fluide pressurisé est une combinaison d'air et d'eau.

9. Ventilateur selon l'une quelconque des revendications 1 à 8, dans lequel l'hélice comprend quatre pales.

10. Ventilateur selon l'une quelconque des revendications 1 à 8, dans lequel l'hélice comprend :
- un moyeu apte à être entraîné par le membre de sortie, ledit moyeu comprenant une structure cylindrique avec une surface périphérique d'une largeur donnée, une surface avant et une surface arrière, ledit moyeu comprenant également une masse inertielle fixée à la structure cylindrique dont le poids est choisi pour maximiser un débit d'air du ventilateur en minimisant une puissance tirée par le moteur; et
- une pluralité de pales solidement intégrées au moyeu, chaque pale comprenant une base s'étendant sur la surface périphérique de la surface avant vers la surface arrière du moyeu.

11. Ventilateur selon l'une quelconque des revendications 1 à 8, dans lequel le système d'engrenage planétaire comprend une masse inertielle apte à être entraînée par le rotor et dont le poids est choisi pour maximiser une vitesse de rotation du rotor en minimisant une puissance tirée par le moteur.

12. Ventilateur selon l'une quelconque des revendications 1 à 8, dans lequel le plastique est du polyamide 46.

13. Ventilateur selon l'une quelconque des revendications 9 ou 10, dans lequel le rotor est apte à tourner à une vitesse allant jusqu'à 13000 tours par minute sans charge et la vitesse du rotor est démultipliée pour atteindre à la charge une vitesse entre 1700 et 1750 tours par minute pour un ventilateur de 20 pouces.

## Patentansprüche

1. Lüfter, der Folgendes aufweist:
- einen Elektromotor mit einem Rotor;
- ein Lüfterrad; und
- ein Planetengetriebe, welches den Rotor des Motors mit dem Lüfterrad verbindet,
wobei das Getriebe Folgendes aufweist:
- ein erstes Sonnenrad, welches aus Kunststoff hergestellt ist und mit dem Rotor verbunden ist;
- ein Planetengetriebesystem aus Kunststoff, welches dazu ausgebildet ist, durch das Sonnenrad angetrieben zu werden, um eine Drehzahl des Rotors zu untersetzen, und welches ein Abtriebselement aufweist, welches dazu ausgebildet ist, dass es mit dem Lüfterrad in Verbindung steht,
wobei der Lüfter **dadurch gekennzeichnet ist,**
**dass** das Sonnenrad und Planetengetriebesystem frei von Schmiermitteln sind; dass das Lüfterrad einen Durchmesser zwischen 12 und 30 Zoll aufweist; dass der Rotor dazu ausgebildet ist, sich mit einer maximalen Drehzahl im unbelasteten Zustand von 13 000 Umdrehungen pro Minute zu drehen;
und **dass** das Getriebe die Drehzahl des Abtriebselements gegenüber der Drehzahl des Rotors im Verhältnis 5:1 verringert.

2. Lüfter nach Anspruch 1,
wobei das Planetengetriebesystem Folgendes aufweist:
- eine Gruppe von mindestens zwei Planetengetrieben, welche dazu ausgebildet sind, durch das erste Sonnenrad angetrieben zu werden, wobei die Gruppe von mindestens zwei Planetengetrieben dazu ausgebildet ist, das Abtriebselement anzutreiben; und
- ein erstes ringförmiges Getriebe, welches koaxial mit dem ersten Sonnenrad ausgebildet ist und welches dazu ausgebildet ist, mit den Planetengetrieben zusammenzuwirken, wobei das erste ringförmige Getriebe an einem Stator des Motors angebracht ist.

3. Lüfter nach Anspruch 2,
wobei die Gruppe von mindestens zwei Planetengetrieben drei Planetengetriebe aufweist, welche in einem Dreieck um das erste Sonnenrad angeordnet sind.

4. Lüfter nach Anspruch 1,
wobei das Planetengetriebesystem Folgendes aufweist:
- ein zweites Sonnenrad;
- eine erste Gruppe von mindestens zwei Planetengetrieben, welche dazu ausgebildet sind, durch das erste Sonnenrad angetrieben zu werden, wobei die erste Gruppe von mindestens zwei Planetengetrieben dazu ausgebildet ist, das zweite Sonnenrad anzutreiben;
- ein erstes ringförmiges Getriebe, welches koaxial mit dem ersten Sonnenrad ausgebildet ist und welches dazu ausgebildet ist, mit der ersten Gruppe der mindestens zwei Planetengetriebe zusammenwirken, wobei das erste ringförmige Getriebe an einem Stator des Motors angebracht ist;
- eine zweite Gruppe von mindestens zwei Planetengetrieben, welche dazu ausgebildet sind, durch das zweite Sonnenrad angetrieben zu werden, wobei die zweite Gruppe von mindestens zwei Planetengetrieben dazu ausgebildet ist, das Abtriebselement anzutreiben; und
- ein zweites ringförmiges Getriebe, welches koaxial mit dem zweiten Sonnenrad ausgebildet ist und welches dazu ausgebildet ist, mit der zweiten Gruppe der mindestens zwei Planetengetriebe zusammenzuwirken, wobei das zweite ringförmige Getriebe an dem Stator des Motors angebracht ist.

5. Lüfter nach Anspruch 4,
wobei sowohl die erste Gruppe als auch die zweite Gruppe der mindestens zwei Planetengetriebe drei Planetengetriebe aufweist, welche jeweils in einem Dreieck um das erste und zweite Sonnenrad angeordnet sind.

6. Lüfter nach einem der Ansprüche 1 bis 5,
wobei das Planetengetriebesystem Folgendes aufweist:
- einen ersten Eingangsanschluss und einen ersten Ausgangsanschluss für ein Druckfluid;
- eine erste Schaufelscheibe, welche dazu ausgebildet ist, durch das durch den ersten Eingangsanschluss eintretende Druckfluid angetrieben zu werden, wobei die erste Schaufelscheibe dazu ausgebildet ist, das erste Sonnenrad anzutreiben, um ein Drehmoment, welches auf das Lüfterrad ausgeübt wird, zu erhöhen; und
- ein erstes Hydrauliksystem mit einem geschlossenen Kreislauf, welches mit dem ersten Eingangsanschluss und dem ersten Ausgangsanschluss verbunden ist, wobei das erste Hydrauliksystem eine erste Hilfspumpe zum Rückführen des aus dem ersten Ausgangsanschluss austretenden Druckfluids zu dem ersten Eingangsanschluss aufweist.

7. Lüfter nach einem der Ansprüche 4 oder 5,
wobei das erste ringförmige Getriebe einen ersten Eingangsanschluss und einen ersten Auslassanschluss für Druckfluid aufweist, wobei das zweite ringförmige Getriebe einen zweiten Eingangsanschluss und einen zweiten Ausgangsanschluss für Druckfluid aufweist,
und wobei das Planetengetriebesystem ferner Folgendes aufweist:
- eine erste Schaufelscheibe, welche dazu ausgebildet ist, durch das durch den ersten Eingangsanschluss eintretende Druckfluid angetrieben zu werden, wobei die erste Schaufelscheibe dazu ausgebildet ist, das erste Sonnenrad anzutreiben, um ein Drehmoment, welches auf das Lüfterrad ausgeübt wird, zu erhöhen;
- ein erstes Hydrauliksystem mit einem geschlossenen Kreislauf, welches mit dem ersten Eingangsanschluss und dem ersten Ausgangsanschluss verbunden ist, wobei das erste Hydrauliksystem eine erste Hilfspumpe zum Rückführen des aus dem ersten Ausgangsanschluss austretenden Druckfluids zu dem ersten Eingangsanschluss aufweist;
- eine zweite Schaufelscheibe, welche durch das durch den zweiten Eingangsanschluss eintretende Druckfluid angetrieben wird, wobei die erste Schaufelscheibe dazu ausgebildet ist, das zweite Sonnenrad anzutreiben, um das Drehmoment, welches auf das Lüfterrad ausgeübt wird, zu erhöhen; und
- ein zweites Hydrauliksystem mit einem geschlossenen Kreislauf, welches mit dem zweiten Eingangsanschluss und dem zweiten Ausgangsanschluss verbunden ist, wobei das zweite Hydrauliksystem eine zweite Hilfspumpe zum Rückführen des aus dem zweiten Ausgangsanschluss austretenden Druckfluids zu dem zweiten Eingangsanschluss aufweist.

8. Lüfter nach einem der Ansprüche 6 oder 7,
wobei das Druckfluid eine Kombination aus Wasser und Luft ist.

9. Lüfter nach einem der Ansprüche 1 bis 8,
wobei das Lüfterrad vier Schaufeln aufweist.

10. Lüfter nach einem der Ansprüche 1 bis 8,
wobei das Lüfterrad Folgendes aufweist:
- eine Nabe, welche dazu ausgebildet ist, durch das Abtriebselement angetrieben zu werden, wobei die Nabe eine zylindrische Struktur mit einer Umfangsfläche mit einer gegebenen Breite, eine Vorderfläche und eine Rückfläche aufweist, wobei die Nabe außerdem eine an der zylindrischen Struktur angebrachte Trägheitsmasse aufweist, deren Gewicht so gewählt ist, dass es den Luftdurchsatz des Lüfters maximiert, während die aus dem Motor abgezogene Leistung minimiert wird; und
- mehrere fest mit der Nabe verbundene Schaufeln, wobei jede Schaufel eine Basis aufweist, welche sich an der äußeren Umfangsfläche der Vorderfläche in Richtung der hinteren Oberfläche der Nabe erstreckt.

11. Lüfter nach einem der Ansprüche 1 bis 8,
wobei das Planetengetriebesystem eine Trägheitsmasse aufweist, welche dazu ausgebildet ist, durch den Rotor angetrieben zu werden, und deren Gewicht so gewählt ist, dass es die Rotordrehzahl maximiert, während eine aus dem Motor abgezogene Leistung minimiert wird.

12. Lüfter nach einem der Ansprüche 1 bis 8,
wobei der Kunststoff aus Polyamid 46 besteht.

13. Lüfter nach einem der Ansprüche 9 oder 10,
wobei der Rotor dazu ausgelegt ist, mit einer Drehzahl von bis zu 13 000 Umdrehungen pro Minute ohne Last zu rotieren, und wobei die Rotordrehzahl untersetzt wird, um eine lastabhängige Drehzahl zwischen 1700 und 1750 Umdrehungen pro Minute für einen 20-Zoll-Lüfter zu erreichen.

## Claims

1. A fan, comprising:
- an electric motor having a rotor;
- a fan propeller, and
- a planetary gear transmission connecting the rotor of the motor to the fan, the
transmission comprising :
- a first sun gear made of plastic and connected to the rotor; and
- a planetary gear system made of plastic, capable of being driven by the sun gear to step down a speed of the rotor, and incorporating an output member that can be connected to the propeller,
the fan charecterised by
the sun gear and planetary gear system being lubricant-free;
the propeller having a diameter between 12 and 30 inches;
the rotor can rotate without load at up to 13000 rotations per minute; and
the transmission reduces the speed of the output member with respect to the rotor speed at a ratio of 5:1.

2. The fan according to claim 1, wherein the planetary gear system comprises:
- a group of at least two planetary gears that can be driven by the first sun gear, the said group of at least two planetary gears capable of driving the output member; and
- a first ring gear coaxial with the first sun gear and capable of collaborating with the planetary gears, the said first ring gear being fixed to a stator of the motor.

3. The fan according to claim 2, wherein the group of at least two planetary gears comprises three planetary gears arranged in a triangle around the first sun gear.

4. The fan according to claim 1, wherein the planetary gear system comprises:
- a second sun gear;
- a first group of at least two planetary gears that can be driven by the first sun gear, the said first group of at least two planetary gears being capable of driving the second sun gear;
- a first ring gear coaxial with the first sun gear, capable of collaborating with the first group of at least two planetary gears, the said first ring gear being fixed to a stator of the motor;
- a second group of at least two planetary gears that can be driven by the second sun gear, the said second group of at least two planetary gears being capable of driving the output member; and
- a second ring gear coaxial with the second sun gear and capable of collaborating with the second group of at least two planetary gears, the said second ring gear being fixed to the stator of the motor.

5. The fan according to claim 4, wherein both the first and second groups of at least two planetary.gears comprises three planetary gears, arranged respectively in a triangle around the first and second sun gears.

6. The fan according to any one of claims 1 to 5, wherein the planetary gear system comprises:
- a first input port and a first output port for the pressurized fluid;
- a first blade disc that can be driven by the pressurized fluid entering through the first input port, the said first blade disc being capable of driving the first sun gear to increase the applied load torque; and
- a first closed loop hydraulic system connected to the first input port and the first output port, the said first hydraulic system incorporating a first auxiliary pump to recirculate the pressurized fluid exiting the first output port back to the first input port.

7. The fan according to any one of claims 4 or 5, wherein the first ring gear comprises a first input port and a first output port for the pressurized fluid, the second ring gear comprising a second input port and a second output port for the pressurized fluid, and with the planetary gear system also comprising :
- a first blade disc that can be driven by the pressurized fluid entering through the first input port, the said first blade disc being capable of driving the first sun gear to increase the applied load torque ;
- a first closed loop hydraulic system connected to the first input port and first output port, the said first hydraulic system incorporating a first auxiliary pump to recirculate the pressurized fluid exiting the first output port back to the first input port;
- a second blade disc that can be driven by the pressurized fluid entering through the second input port, the first blade disc being capable of driving the second sun gear to increase the applied load torque; and
- a second closed loop hydraulic system connected to both the second input port and second output port, the said second hydraulic system incorporating a second auxiliary pump to recirculate the pressurized fluid exiting the second output port back to the second input port.

8. The fan according to any one of claims 6 or 7, wherein the pressurized fluid is made up of a combined air and water solution.

9. The fan according to any one of claims 1 to 8, used in combination with a fan propeller, with the propeller made up of four blades.

10. The fan according to any one of claims 1 to 8, used in combination with a fan propeller, with the propeller comprising :
- a hub that can be driven by the output member, the said hub incorporating a cylindrical structure that has a peripheral surface of given width, a front surface and a back surface, and with the said hub also containing an inertial mass attached to the cylindrical structure, the weight of the inertial mass chosen in order to maximise airflow by the fan whilst minimising the power drawn by the motor; and
- multiple blades securely fixed to the hub, with the base of each blade extending along the peripheral surface, from the front surface to the back surface of the hub.

11. The fan according to any one of claims 1 to 8, wherein the planetary gear system comprises an inertial mass that can be driven by the rotor, the weight of the inertial mass chosen in order to maximise the rotational speed of the rotor whilst minimising the power drawn by the motor.

12. The fan according to any one of claims 1 to 8, wherein the plastic is made from polyamide 46.

13. The fan used in combination with a fan propeller according to any one of claims 9 or 10, wherein the rotor is capable of rotating at a speed of up to 13,000 revolutions per minute on a no-load and reaching a speed of 1,700 to 1,750 revolutions per minute with load, for a 20-inch fan.
